# EUROPEAN PATENT APPLICATION

(11) **EP 2 728 531 A1**
(43) Date of publication of application: **07.05.2014**
(21) Application number: 13188621.0
(22) Date of filing: 15.10.2013
(51) Int. Cl.: G06Q 20/32

(54) **System and Method for increasing security in internet transactions**

(30) Priority: 05.11.2012 US 201213669006
(71) Applicant: Sequent Software Inc., Redwood City, CA 94065 (US)
(72) Inventor: Weinstein, Andrew, San Francisco, CA California 94118 (US); Roy, Kaushik, Foster City, CA California 94404 (US)
(74) Representative: Witte, Weller & Partner Patentanwälte mbB

(57) **Abstract**

Increasing security of financial transactions conducted over the Internet is disclosed. In an example, an apparatus may be configured to prompt a user for authorization to permit a pending purchase initiated by a purchase initiating device. The apparatus may establish, via a mobile network interface, a secure communication channel with a server and communicate a credential via the secure communication channel. The apparatus may generate a token based on the credential and communicate the token to the server via the mobile network interface.

## Description

### CROSS REFERENCE TO RELATED APPLICATIONS

. This application claims the benefit of, and the priority to, U.S. Provisional Application No. 61/556,179, titled "System and Method For Increasing Security in Internet Transactions", and filed on November 5, 2011. The content of which is hereby incorporated by reference in its entirety.

### TECHNICAL FIELD

. The present invention relates generally to the processing of financial transactions conducted over the internet, and more particularly to a system and method for increasing security in internet transactions.

### BACKGROUND

. When consumers make purchases from internet retailers, they typically must enter their payment card information manually into a purchase form on an applicable web site. That payment card information is then sent to the consumer's bank to validate that the consumer has funds in their account to cover the merchandise being purchased. On the other hand, when the same consumer uses the same payment card to purchase at a physical retailer, they will typically swipe the card at a point-of-sale terminal. Although the same card is used in both instances, the payment networks (such as Visa, MasterCard, American Express, Discover, etc.) charge merchants a higher rate in the former scenario (generally referred to as a "Card Not Present" rate) and a lesser rate in the latter scenario (generally referred to as a "Card Present" rate).

. One of the significant reasons for the difference between the two rates stems from the deviation in the trustworthiness of the payment card data being presented. For internet purchases, the consumer generally enters only the payment card information that is visible on the payment card itself (such as the 16 digit card number, the expiration date, and the CVV), along with certain other personally identifiable information (such as the user's name and mailing or billing address). However, when the consumer's card is swiped at a physical merchant, much more information, which is saved on the magnetic stripe or in the smart card chip of the plastic payment card, is sent to and verified by the consumer bank. Thus, the difference in the amount of information provided by the payment card affects the trustworthiness, and ultimately, the costs to the merchant, of the transactions.

. Accordingly, there is a need for a system and method that can improve the level of trustworthiness for internet transactions, and thus potentially decrease the costs attributed to such transactions by payment networks.

### SUMMARY

. The following presents a simplified summary of the present disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

. Methods, systems, apparatuses, and computer readable media are disclosed for increasing security of financial transactions conducted over the Internet.

. In an example aspect, a user may be prompted for authorization to permit a pending purchase initiated by a purchase initiating device. A secure communication channel may be established with a server and a credential may be communicated via the secure communication channel. A token may be generated based on the credential and communicated to the server via a mobile network interface.

. Aspects of the disclosure may be provided in at least one non-transitory computer-readable medium having computer-executable instructions, that when executed by at least one processor, cause performance of one or more of the process steps described herein.

. The invention includes the following aspects defined in the following clauses which form part of the present description, which, however, do not represent claims, in accordance with the decision J15/88 of the Legal Board of Appeal of the European Patent Office.
(1) An apparatus comprising:
   a processor;
   a mobile network interface;
   a secure element storing a credential; and
   a memory storing computer readable instructions that, when executed by the processor,
   cause the apparatus at least to perform:
      prompting a user for authorization to permit a pending purchase initiated by a purchase initiating device;
      establishing, via the mobile network interface, a secure communication channel with a server;
      communicating the credential via the secure communication channel;
      generating a token based on the credential; and
      communicating the token to the server via the mobile network interface.
(2) The apparatus of clause 1, wherein the secure element stores a plurality of credentials.
(3) The apparatus of clause 2, wherein the computer readable instructions, when executed by the processor, cause the apparatus to receive a selection of a particular one of the plurality of credentials.
(4) The apparatus of clause 1, wherein the generating of the token is based upon:
   at least one of Track 1 data and Track 2 data of a credit card; and
   a key.
(5) The apparatus of clause 4, wherein the key is one of a symmetric key and an asymmetric key.
(6) The apparatus of clause 1, wherein the generating of the token is based upon a counter value.
(7) The apparatus of clause 1, wherein the computer readable instructions, when executed by the processor, cause the apparatus to communicate information along with the token to enable the server to recreate the token.
(8) The apparatus of clause 1, wherein the computer readable instructions, when executed by the processor, cause the apparatus to:
   receive a link via the mobile network interface to initiate the prompting of the user for authorization to permit the pending purchase; and
   authenticate the link.
(9) The apparatus of clause 8, wherein the computer readable instructions, when executed by the processor, cause the apparatus to present the link for user selection subsequent to authenticating the link.
(10) A method comprising:
   prompting a user for authorization to permit a pending purchase initiated by a purchase initiating device;
   establishing, via a mobile network interface of a device, a secure communication channel with a server;
   communicating a credential stored by a secure element of the device via the secure communication channel;
   generating, by a processor of the device, a token based on the credential; and
   communicating the token to the server via the mobile network interface.
(11) The method of clause 10, wherein the generating of the token is based upon:
   at least one of Track 1 data and Track 2 data of a credit card; and
   a key.
(12) The method of clause 10, wherein the generating of the token is based upon a counter value.
(13) The method of clause 10, further comprising communicating information along with the token to enable the server to recreate the token.
(14) The method of clause 10, further comprising:
   receiving a link via the mobile network interface to initiate prompting of the user for authorization to permit the pending purchase; and
   authenticating the link.
(15) The method of clause 14, further comprising presenting the link for user selection subsequent to authenticating the link.
(16) A computer readable medium storing computer executable instructions that, when executed, cause an apparatus at least to perform:
   prompting a user for authorization to permit a pending purchase initiated by a purchase initiating device;
   establishing, via a mobile network interface of the apparatus, a secure communication channel with a server;
   communicating a credential stored by a secure element of the apparatus via the secure communication channel;
   generating a token based on the credential; and
   communicating the token to the server via the mobile network interface.
(17) The computer readable medium of clause 16, wherein the generating of the token is based upon:
   at least one of Track 1 data and Track 2 data of a credit card; and
   a key.
(18) The computer readable medium of clause 16, wherein the generating of the token is based upon a counter value.
(19) The computer readable medium of clause 16, wherein the computer readable instructions, when executed, cause the apparatus to communicate information along with the token to enable the server to recreate the token.
(20) The computer readable medium of clause 16, wherein the computer readable instructions, when executed, cause the apparatus to:
   receive a link via the mobile network interface to initiate prompting of the user for authorization to permit the pending purchase;
   authenticate the link; and
   present the link for user selection subsequent to authenticating the link.
(21) A system comprising:
   a purchase initiating device configured to present a user interface and to receive a selection via the user interface indicating intent to purchase at least one item; and
   a mobile device comprising:
      a processor;
      a mobile network interface;
      a secure element storing a credential; and
      a memory storing computer readable instructions that, when executed by the processor, cause the mobile device at least to perform:
         prompting a user for authorization to permit a pending purchase initiated by the purchase initiating device;
         establishing, via the mobile network interface, a secure communication channel with a server;
         communicating the credential via the secure communication channel;
         generating a token based on the credential; and
         communicating the token to the server via the mobile network interface.
(22) The system of clause 21, wherein the generating of the token is based upon at least one of:
   at least one of Track 1 data and Track 2 data of a credit card;
   a key; and
   a counter value.
(23) The system of clause 21, wherein the computer readable instructions, when executed, cause the mobile device to communicate information along with the token to enable the server to recreate the token.
(24) The system of clause 21, wherein the computer readable instructions, when executed, cause the mobile device to:
   receive a link via the mobile network interface to initiate prompting of the user for authorization to permit the pending purchase;
   authenticate the link; and
   present the link for user selection subsequent to authenticating the link.

### BRIEF DESCRIPTION OF THE DRAWINGS

. For a better understanding of the present disclosure, non-limiting and non-exhaustive embodiments are described in reference to the following drawings. In the drawings, like reference numerals refer to like parts through all the various figures unless otherwise specified.
FIG 1a is a block diagram illustrating some of the logical blocks within a portable communication device and the operable interconnections between an end user's communication device, an internet retailer server, and an issuance system that may be relevant to the present system.
FIG. 1b illustrates one potential dialogue window that may be programmed for use in association with the present system when the user activates the "use e wallet" button in Fig. 1a.
FIG. 2 is a flow diagram illustrating one exemplary process for processing internet transactions using information present in the secure element.
FIG. 3 is a flow diagram illustrating a second exemplary process for processing internet transactions using information present in the secure element.

### DETAILED DESCRIPTION

. The present invention now will be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

. The present invention provides a system and method that can be utilized with a variety of different portable communication devices, including but not limited to PDA's, cellular phones, smart phones, laptops, tablet computers, and other mobile devices that include cellular voice and data service as well as preferable access to consumer downloadable applications. One such portable communication device could be an iPhone, Motorola RAZR or DROID; however, the present invention is preferably platform and device independent. For example, the portable communication device technology platform may be Microsoft Windows Mobile, Microsoft Windows Phone 7, Palm OS, RIM Blackberry OS, Apple OS, Android OS, Symbian, Java or any other technology platform. For purposes of this disclosure, the present invention has been generally described in accordance with features and interfaces that are optimized for a smart phone utilizing a generalized platform, although one skilled in the art would understand that all such features and interfaces may also be used and adapted for any other platform and/or device.

. The portable communication device may include one or more short proximity electromagnetic communication devices, such as an NFC, RFID, or Bluetooth transceiver. It is presently preferred to use an NFC baseband that is Compliant with NFC IP 1 standards (www.nfcforum.org), which provides standard functions like peer-to-peer data exchange, reader-writer mode (i.e., harvesting of information from RFID tags), and contactless card emulation (per the NFC IP 1 and ISO 14443 standards) when paired with a secure element on the portable communication device and presented in front of a "contactless payment reader" (see below at point of sale). As would be understood in the art by those having the present specification, figures, and claims before them, the NFC IP 1 standards are simply the presently preferred example, which could be exported - in whole or in part -- for use in association with any other proximity communication standard. It is further preferred that the portable communication device include an NFC/RFID antenna (conformed to NFC IP 1 and ISO 14443 standards) to enable near field communications. However, as would be understood in the art NFC/RFID communications may be accomplished albeit over even shorter ranges and potential read problems.

. The portable communication device also includes a mobile network interface to establish and manage wireless communications with a mobile network operator. The mobile network interface uses one or more communication protocols and technologies including, but not limited to, global system for mobile communication (GSM), 3G, 4G, code division multiple access (CDMA), time division multiple access (TDMA), user datagram protocol (UDP), transmission control protocol/Internet protocol (TCP/IP), SMS, general packet radio service (GPRS), WAP, ultra wide band (UWB), IEEE 802.16 Worldwide Interoperability for Microwave Access (WiMax), SIP/RTP, or any of a variety of other wireless communication protocols to communicate with the mobile network of a mobile network operator. Accordingly, the mobile network interface may include a transceiver, transceiving device, or network interface card (NIC). It is contemplated that the mobile network interface and short proximity electromagnetic communication device could share a transceiver or transceiving device, as would be understood in the art by those having the present specification, figures, and claims before them.

. The portable communication device further includes a user interface that provides some means for the consumer to receive information as well as to input information or otherwise respond to the received information. As is presently understood (without intending to limit the present disclosure thereto) this user interface may include a microphone, an audio speaker, a haptic interface, a graphical display, and a keypad, keyboard, pointing device and/or touch screen. As would be understood in the art by those having the present specification, figures, and claims before them, the portable communication device may further include a location transceiver that can determine the physical coordinates of device on the surface of the Earth typically as a function of its latitude, longitude and altitude. This location transceiver preferably uses GPS technology, so it may be referred to herein as a GPS transceiver; however, it should be understood that the location transceiver can additionally (or alternatively) employ other geo-positioning mechanisms, including, but not limited to, triangulation, assisted GPS (AGPS), E-OTD, CI, SAI, ETA, BSS or the like, to determine the physical location of the portable communication device on the surface of the Earth.

. The portable communication device will also include a processor (e.g., microprocessor) and mass memory or other non-transitory computer readable medium. The mass memory may include ROM, RAM as well as one or more removable memory cards. The mass memory provides storage for computer readable instructions and other data, including a basic input/output system ("BIOS") and an operating system for controlling the operation of the portable communication device. The computer readable instructions, when executed by the processor, may cause the portable communication device to perform the functions described herein attributed to the portable communication device. The portable communication device will also include a device identification memory dedicated to identify the device, such as a SIM card. As is generally understood, SIM cards contain the unique serial number of the device (ESN), an internationally unique number of the mobile user (IMSI), security authentication and ciphering information, temporary information related to the local network, a list of the services the user has access to and two passwords (PIN for usual use and PUK for unlocking). As would be understood by those in the art having the present specification, figures, and claims before them, other information may be maintained in the device identification memory depending upon the type of device, its primary network type, home mobile network operator, etc.

. Each portable communication device may have two subsystems: (1) a "wireless subsystem" that enables communication and other data applications as has become commonplace with users of cellular telephones today, and (2) the "secure transactional subsystem" which may also be known as the "payment subsystem". The secure transactional subsystem includes the secure element and associated device software for communication to management and provisioning systems as well as the customer facing interface for use and management of secure data stored in the secure element. It is contemplated that this secure transactional subsystem will preferably include a Secure Element, similar (if not identical) to that described as part of the Global Platform 2.1.X, 2.2, or 2.2.X (www.globalplatform.org). The secure element has been implemented as a specialized, separate physical memory used for industry common practice of storing payment card track data used with industry common point of sale; additionally, other secure credentials that can be stored in the secure element include employment badge credentials (enterprise access controls), hotel and other card-based access systems and transit credentials. An additional secure data store may also be available on the portable communication device.

. Each of the portable communications devices is connected to at least one mobile network operator. The mobile network operator generally provides physical infrastructure that supports the wireless communication services, data applications and the secure transactional subsystem via a plurality of cell towers that communicate with a plurality of portable communication devices within each cell tower's associated cell. In turn, the cell towers may be in operable communication with the logical network of the mobile network operator, POTS, and the Internet to convey the communications and data within the mobile network operator's own logical network as well as to external networks including those of other mobile network operators. The mobile network operators generally provide support for one or more communication protocols and technologies including, but not limited to, global system for mobile communication (GSM), 3G, 4G, code division multiple access (CDMA), time division multiple access (TDMA), user datagram protocol (UDP), transmission control protocol/Internet protocol (TCP/IP), SMS, general packet radio service (GPRS), WAP, ultra wide band (UWB), IEEE 802.16 Worldwide Interoperability for Microwave Access (WiMax), SIP/RTP, or any of a variety of other wireless communication protocols to communicate with the portable communication devices.

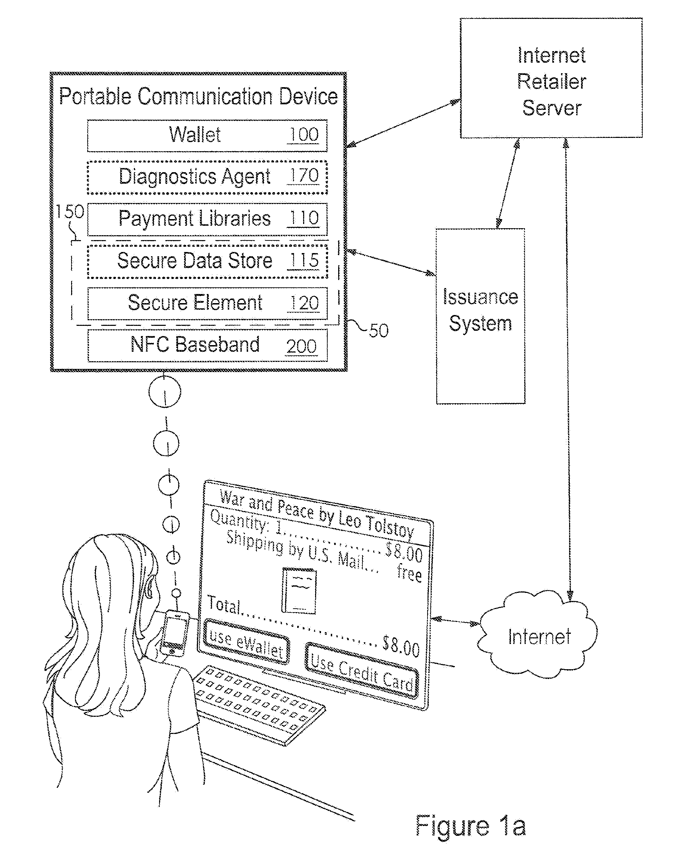

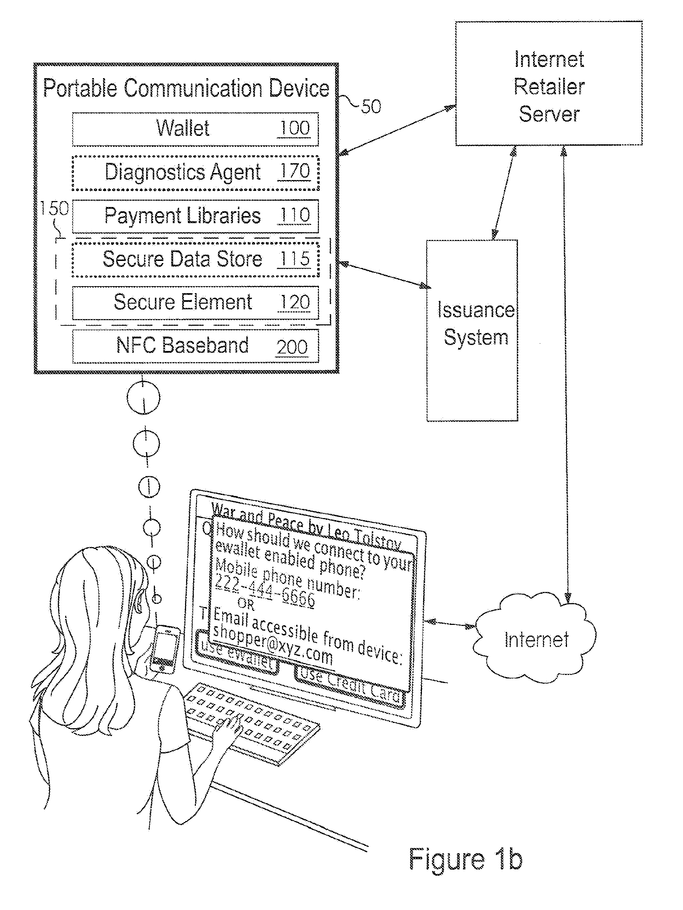

. Turning now to the figures, as shown in FIGS. 1a and 1b, each portable communication device 50 may contain a wallet 100, payment libraries 110, secure element 120, NFC Baseband 200, an optional secure data store 115, and diagnostics agent 170. Wallet 100 is a computer application that allows the consumer to view and select credentials (e.g., one or more payment cards) stored in the device 50 in secure element 120 (or perhaps secure data store 115).

. The payment libraries 110 are used by wallet 100 to manage and perform housekeeping tasks on the secure element 120 and perform over-the-air (OTA) provisioning via data communication transceiver (including its SMS channel), on the device 50. It is contemplated that the OTA data communications could be encrypted in some manner and an encryption key will be deployed on the device 50.

. The secure data store 115 provides secured storage on the portable communication device 50. Various levels of security may be provided depending upon the nature of the data intended for storage in secure data store 115. For instance, secure data store 115 may simply be password-protected at the operating system level of device 50. As is known in these operating systems, the password may be a simple alphanumeric or hexadecimal code that is stored somewhere on the device 50. Alternatively, the data in secure data store 115 is preferably encrypted. More likely, however, the secure data store 115 will be set up as a virtual secure element in the manner disclosed in the co-pending patent application (owned by the assignee of the present application) entitled "System and Method for Providing A Virtual Secure Element on a Portable Communication Device" filed on October 21, 2011 and hereby incorporated by reference.

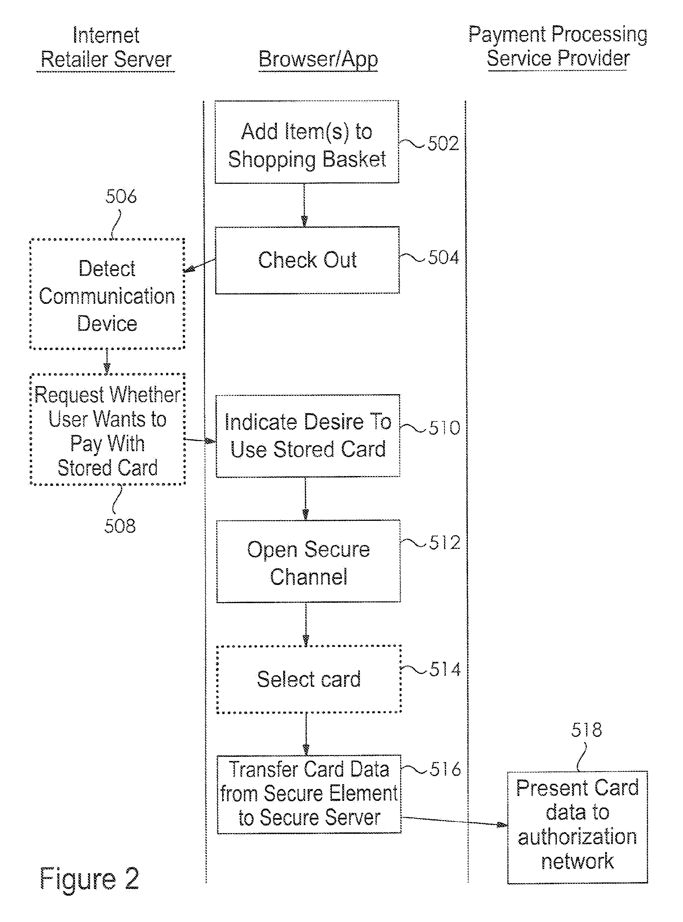

. Fig. 2 describes one exemplary process for enabling smart card-based card payment data from a portable communication device 50 to be used to complete a purchase from an internet retailer (either via a browser or an app operating on the communication device (which has a secure element 120)). It should be understood by those skilled in the art having the present specifications and drawings before them that although the present process may be more streamlined when used in conjunction with a browser or an "app" operating on the portable communication device 50 (having a secure element 120 operably associated therewith), it is contemplated - particularly in view of the present invention -- that secure elements may be deployed some day in the future in association with desktop, laptop and tablet computers. Moreover, there is described herein an embodiment that allows a transaction commenced on a computer without a secure element to be paid for using the secure element on a portable communication device. In some embodiments, the browser and/or apps may be granted permission to access the secure element directly or more preferably via the wallet 100. In the depiction of FIGS. 1a and 1b, we have illustrated a consumer having accessed an online store via their internet browser deployed on a desktop computer.

. Returning to FIG. 2, in step 502, a consumer adds one or more items that they wish to purchase to their online shopping basket, and then proceeds to a checkout screen, in step 504, where the user provides an indication of their intent to purchase those items. In particular, FIG. 1a illustrates the user having added an item (i.e., the book War and Peace by Leo Tolstoy) to the online shopping basket of that store. In step 506, the system detects whether there is a secure element on the device in current communication with the online shopping basket/retailer. If a secure element is detected, the internet retailer server offers the consumer the option to pay with a card stored in the device's secure element in step 508. Where the consumer has been shopping on an application or via a browser operating on a device that has a secure element 120 (such as portable communication device 50) the system may already be aware of the presence of the secure element so the checkout flow will automatically provide "use e wallet" as one option for payment (as depicted in FIG. 1a). Of course, checking for a secured element before the user choose the e wallet transaction option would not be required. As such, the option to pay using a card stored in a secure element may simply be presented to all consumers, regardless of whether the device they are using contains a secure element. Of course, in the future when all communication devices contain secure elements this detection step would be unnecessary.

. Where the user has been shopping on an application or via a browser operating on a device that does not have its own secure element, as illustrated in FIG. 1b, upon selection of the "eWallet" button of FIG. 1a, the user interface of the system prompts the consumer to provide unique identifying information of a device that does have a secure element. Provision of this or some other unique identification information (such as IMEI, MEID, or PIN) to the system will be used to send a unique link (associated with the shopping cart and/or retailer's processing services) to the consumer's email address, phone number, an app operating on the uniquely identified device. This link, which will likely comprise a URL, would preferably be authenticated in association with the secure element 120 before the link was presented to the consumer. Once the link is presented, the user can then select the link on the identified communication device 50 to complete the transaction.

. If, in step 510, the consumer chooses to use a credit card whose information is stored in the secure element (i.e., a credential) as their method of payment, the system commands the secure element to generate a secure token and establish a secure data channel (step 512) between the secure element 120 in the communication device 50 to a payment processing service provider. The secure channel may be established in a similar, if not identical, manner that is typically used for provisioning of card information to a secure element. Here, however, the secure element will be provided with the URL or IP Address for the payment processing service provider (most likely by the online retailer). This URL or IP Address is preferably authenticated by the secure element 120 (using, for example, the Controlling Authority provisions found in the Global Platform standard version 2.2 or later) before the secure channel is used for the outgoing transmissions of the user's selected credential. The logic necessary to command the secure element 120 in a device 50 can be deployed on devices through one or more APIs, which may be provided as part of an SDK to internet retailers for their incorporation in the check-out flow of their website or apps.

. With the secure channel open, the consumer, in step 514, may be prompted by the communication device to select which card (credential) they would like to use for payment. Of course, if only a single credential is stored in the secure element, that credential may be automatically selected and step 514 need not be performed.

. Once a card is selected, the secure element is activated and the credential stored in the secure element for the card is transferred, via the secure channel, to a secure server at the payment processing service provider in step 516 (i.e., Issuance System of FIGS. 1a and 1b). For purposes of this process, it is assumed that the card data for the selected card has already been provisioned and stored in the secure element, either via the methods described above, or in any other way. The stored card data therefore preferably includes additional information beyond what can be visually seen on the face of the consumer's plastic payment card, such as the information stored in the magnetic strip and/or smart card chip of the card.

. In present day communication devices, when a secure element is activated, the relevant credential content is passed to the NFC baseband of the communication device. Accordingly, in such communication devices, it may be necessary to obtain the card data as it is being passed to the NFC baseband and redirect it to the communication device's data transceiver so that it can be sent to the payment processing service provider. However, it is contemplated that the secure element in a communication device may also be configured such that activation of the secure element 120 directly passes the relevant content to the data transceiver. The communication device 50 also preferably transmits to the payment processing service provider additional information relating to transaction, such as information indicating the amount of the transaction and/or the internet retailer associated with the transaction.

. In step 516, the applicable applet in the secure element on the communication device generates a unique secure token based upon (1) card information including PAN, expiration date and other information available in Track 1 and/or Track 2 card data and (2) a symmetric and/or asymmetric key based on public key infrastructure technology, and (3) counter value (equivalent to an ATC value provided in a dCVV-compliant payment card) and transmits the unique secure token to the payment processing service provider (the 'acquirer' of the transaction on behalf of the merchant), along with addition information (such as time information, merchant ID, valid card number, expiration date, credit-card limit, card usage, CVV) sufficient to enable the secure token to be interpreted and/or recreated and/or paired with a valid card on file and/or user account by the payment processing server and/or an issuer server associated with an issuing bank. Thus, the payment processing service provider in effect acts as the equivalent of a contactless payment reader at a merchant, such as those used for NFC transactions. The issuer bank can then use the full payment card data, which was provided from the consumer's secure element 120, to determine if the card data is valid using the same fraud mitigation measures used when contactless payment purchases are made at physical merchants.

. Upon receiving a valid unique secure token, the secure server (i.e., issuance system) at the payment processing service provider may trigger presentation of the appropriate card data to the issuing bank in order to process the transaction as a Card Present Transaction, as set forth in step 518. In one embodiment, while waiting for bank approval, the consumer may be instructed to wait while the transaction is approved, similar to what a consumer experiences in a typical internet merchant purchase.

. Upon approval (or denial) from the bank, the normal internet purchase completion experience continues as per existing internet purchase behavior. As such procedures are well-known in the art, they are not discussed in further detail herein.

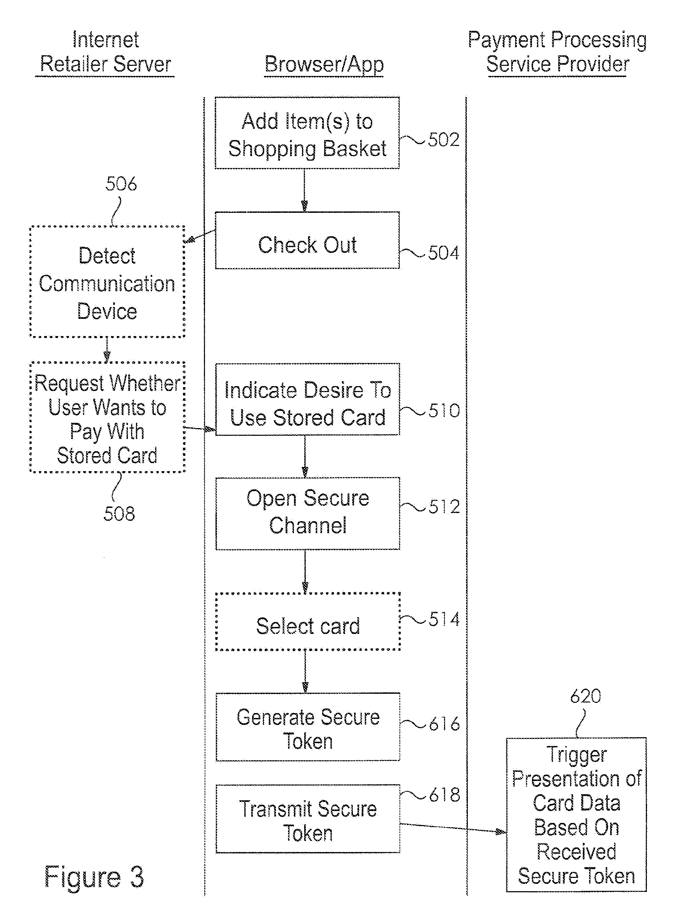

. Fig. 3 illustrates a second exemplary process for enabling smart card-based card payment data to be used when making purchases from internet retailers. In this process, rather than transferring the actual card data from the secure element to the secure server at the payment processing service provider, the system may be configured to virtualize the type of card data presented to the issuing bank in the foregoing example on the issuer adapter (FIG. 1). As will be understood by one of ordinary skill in the art, this process can be implemented once the phone and the card data stored in the communication device's secure element has been validated by a trusted source (i.e., trusted by a merchant services party), through any number of industry standard authentication processes. By using a token to trigger the use of the secure transaction information previously stored in the issuer adapter, the potential latency in transmissions and processing can be significantly decreased.

. In the process described in FIG. 3, steps 502-514 are identical to those described in the embodiment of Fig. 2. Step 616 differs in that rather than generating the secure transaction data discussed in association with step 516 above, a secure token (preferably having a smaller data payload than the secure transaction data) that references the secure transaction data previously stored on the issuer adapter is generated. Step 616 may be working in the background and need not wait until an actual transaction process has been commenced. The secure token generated in step 616, is needed however in step 618 for transmission to the secure server which must occur at the time of the desired transaction in substantially real time. Once the secure token is transmitted to the secure server, it validates the secure token and if the secure token is valid presents the previously stored secure transaction data on the issuer adapter to the merchant services party.

. Any of the devices described herein may include at least one processor (e.g., microprocessor) and at least one memory or other non-transitory computer readable medium. The memory may include ROM, RAM as well as one or more removable memory cards. The computer readable instructions, when executed by the at least one processor, may cause the device to perform the functions described herein attributed to the device.

. The foregoing description and drawings merely explain and illustrate the invention and the invention is not limited thereto. While the specification is described in relation to certain implementation or embodiments, many details are set forth for the purpose of illustration. Thus, the foregoing merely illustrates the principles of the invention. For example, the invention may have other specific forms without departing from its spirit or essential characteristic. The described arrangements are illustrative and not restrictive. To those skilled in the art, the invention is susceptible to additional implementations or embodiments and certain of these details described in this application may be varied considerably without departing from the basic principles of the invention. It will thus be appreciated that those skilled in the art will be able to devise various arrangements which, although not explicitly described or shown herein, embody the principles of the invention and, thus, within its scope and spirit.

## Claims

1. An apparatus comprising:
a processor;
a mobile network interface;
a secure element storing a credential; and
a memory storing computer readable instructions that, when executed by the processor, cause the apparatus at least to perform:
prompting a user for authorization to permit a pending purchase initiated by a purchase initiating device;
establishing, via the mobile network interface, a secure communication channel with a server;
communicating the credential via the secure communication channel;
generating a token based on the credential; and
communicating the token to the server via the mobile network interface.

2. The apparatus of claim 1, wherein the secure element stores a plurality of credentials, and wherein the computer readable instructions, when executed by the processor, cause the apparatus to receive a selection of a particular one of the plurality of credentials.

3. The apparatus of claim 1, wherein the generating of the token is based upon:
at least one of Track 1 data and Track 2 data of a credit card; and
a key that is one of a symmetric key and an asymmetric key.

4. The apparatus of claim 1, wherein the generating of the token is based upon a counter value.

5. The apparatus of claim 1, wherein the computer readable instructions, when executed by the processor, cause the apparatus to communicate information along with the token to enable the server to recreate the token.

6. The apparatus of claim 1, wherein the computer readable instructions, when executed by the processor, cause the apparatus to:
receive a link via the mobile network interface to initiate the prompting of the user for authorization to permit the pending purchase;
authenticate the link; and
present the link for user selection subsequent to authenticating the link.

7. A method comprising:
prompting a user for authorization to permit a pending purchase initiated by a purchase initiating device;
establishing, via a mobile network interface of a device, a secure communication channel with a server;
communicating a credential stored by a secure element of the device via the secure communication channel;
generating, by a processor of the device, a token based on the credential; and
communicating the token to the server via the mobile network interface.

8. The method of claim 7, wherein the generating of the token is based upon:
at least one of Track 1 data and Track 2 data of a credit card; and
a key.

9. The method of claim 7, wherein the generating of the token is based upon a counter value.

10. The method of claim 7, further comprising communicating information along with the token to enable the server to recreate the token.

11. The method of claim 7, further comprising:
receiving a link via the mobile network interface to initiate prompting of the user for authorization to permit the pending purchase;
authenticating the link; and
presenting the link for user selection subsequent to authenticating the link.

12. A system comprising:
a purchase initiating device configured to present a user interface and to receive a selection via the user interface indicating intent to purchase at least one item; and
a mobile device comprising:
a processor;
a mobile network interface;
a secure element storing a credential; and
a memory storing computer readable instructions that, when executed by the processor, cause the mobile device at least to perform:
prompting a user for authorization to permit a pending purchase initiated by the purchase initiating device;
establishing, via the mobile network interface, a secure communication channel with a server;
communicating the credential via the secure communication channel;
generating a token based on the credential; and
communicating the token to the server via the mobile network interface.

13. The system of claim 12, wherein the generating of the token is based upon at least one of:
at least one of Track 1 data and Track 2 data of a credit card;
a key; and
a counter value.

14. The system of claim 12, wherein the computer readable instructions, when executed, cause the mobile device to communicate information along with the token to enable the server to recreate the token.

15. The system of claim 12, wherein the computer readable instructions, when executed, cause the mobile device to:
receive a link via the mobile network interface to initiate prompting of the user for authorization to permit the pending purchase;
authenticate the link; and
present the link for user selection subsequent to authenticating the link.
